# EUROPEAN PATENT APPLICATION

(11) **EP 1 591 485 A1**
(43) Date of publication of application: **02.11.2005**
(21) Application number: 04009790.9
(22) Date of filing: 26.04.2004
(51) Int. Cl.: C08L 31/04

(54) **EVM-modified sponge material**

(71) Applicant: LANXESS Deutschland GmbH, 51369 Leverkusen (DE)
(72) Inventor: Hoch, Martin, Dr., 52525 Heinsberg (DE); Parg, Roland, Dr., 51373 Leverkusen (DE); Winkelbach, Hans, Dr., 51399 Burscheid (DE); Taschner, Frank, 40789 Monheim (DE); Panskus, Knut, 51375 Leverkusen (DE); Arndt, Wolfgang, 41542 Dormagen (DE); Soew, Yong Siak, Singapore 575510 (SG); Piermatteo, Ciro, 51381 Leverkusen (DE); Caon, Fulvio, 51375 Leverkusen (DE)

(57) **Abstract**

This invention relates to a visco-elastic compound comprising a polymer compound A, 5 to 40 wt.% of a polymeric component B which is an ethylene vinyl acetate copolymer with an vinyl acetate content in the range from 45 to 98 wt.% and additives, a process for the production of the inventive visco-elastic compound, the use of the inventive visco-elastic compound for the production of a soft expanded article, a process for the production of a soft expanded article, the use of the soft expanded article as a damping or cushioning layer and soft articles obtainable by using the inventive compound.

## Description

This invention relates to a visco-elastic compound comprising a polymer compound A, 5 to 40 wt.% of a polymeric compound B which is an ethylene vinyl acetate copolymer with an vinyl acetate content in the range from 45 to 98 wt.% and additives, a process for the production of the inventive visco-elastic compound, the use of the inventive visco-elastic compound for the production of a soft expanded article, a process for the production of a soft expanded article, the use of the soft expanded article as a damping or cushioning layer and soft articles obtainable by using the inventive compound.

Up to now crosslinked and foamed articles essentially made of an ethylene vinyl acetate with an vinyl acetate content up to 40 wt.% are called EVA and used to manufacture light weight sponges (EVA sponges) as cushioning and support elements.

Damping or cushioning layers made out of said EVA sponges are often bonded to other parts, for example foamed mid-soles of sport shoes have to be bonded to end-sole parts and to the upper leather material or to shoe liners. Sponges made out of EVA are very difficult to bond due to the inactive nature of the surface.

Therefore, one step of the bonding procedures according to the state of the art comprises a pretreatment of the sponge surface with solvent-based primers.

One target of this invention was to provide a method which allows to use only water-based primer system for bonding to other parts, or even better, to allow bonding without the use of any primer.

These sponges are also used for mattresses, for packaging materials, for floating devices, for tires or for handles on sports equipment or for protection.

Therefore it is a subject to modify the existing EVA sponge material to achieve softness and comfortable grip properties.

Another aspect of the invention is to modify existing EVA sponge materials to allow easier coloring in order to broaden design options. A desired process is to apply color to the already manufactured sponge parts without changing the recipe and process for the sponge manufacture. Such a coloring process can be a dip-dyeing, however, existing sponge material show a poor ability of dyeing.

Cushioning or damping layers or parts relevant for the mentioned fields of application are essentially based on polyolefinic thermoplastics like EVA and optional, with addition of some rubber-like materials.

These compounds are expanded by chemical or physical means to get cushioning properties and to reduce the density.

In most cases such a sponge is cross-linked to a certain degree together with expansion to achieve the desired mechanical properties, namely the dimensional stability upon use. Such a cross-linking can be carried out by means of radical initiators such as peroxides.

Especially in modem sport shoe design it is desirable to adjust the mechanical properties of the used EVA based cushioning layers in order to meet the anatomical demands during walking and running.

This is for example described in EP-A 1 238 790 where the use of different damping layers in the heel area and the for-foot area are stressed.

Various polymeric materials to modify EVA-based damping layers have therefore been proposed such as EPDM (ethylene propylene diene monomers), poly-isoprene rubber, butyl rubber, LDPE (low density polyethylene) and LLDPE (linear low density polyethylene), ethylene (met)acrylic acid copolymers and BR (Butadiene rubber).

For sport shoe applications the choice of EVA mainly depends on the vinyl acetate content. According to WO-A 2001002473 vinyl acetate grades with amount of vinyl acetate above 35 wt.% tend to be too tacky and soft so that handling in the production process is too difficult. On the other hand, vinyl acetate contents below 15 wt.% tend to give elastic and flexibility properties which are unsatisfactory. The feel of such a material is dry and plastic-like and lacks the comfortable rubber-like softness. EVA grades with vinyl acetate contents between 18 and 27 wt.% are considered as standard grades according to EP-A 1238790.

JP 03074439 describes EVA and EPDM blends to produce sponges with higher resilience compared to polyurethane foams. The disadvantage of these sponges is that they are even more difficult to bond due to the non-polar polyolefinic nature of the added EPDM.

Elasticity and shock absorption foams are described in KR 2000019976 by combining thermoplastics and rubber materials as sponge polymers. However, this application does not provide thermoplastic and rubber combinations based on the same copolymer types realized in the unique combination of EVA and an ethylene vinyl acetate copolymer with at least 40 wt.% of vinyl acetate content (EVM). Any properties with respect to bonding are not disclosed in KR 2000019976.

Combinations of EVA and silicone-modified EVA are described in JP 2000014403. Such a material will pose considerable difficulties in standard bonding systems to bond the mid-sole to the shoe liner or the outer sole because the addition silicone will create even lower surface energies.

Modification of EVA based foams with ethylene-1-butene copolymer as described by Cha et.al. in Eylasutoma (2001), 36(1), 14-21 will not give easy to bond materials. It is mentioned that with such a modified EVA leads to a lower expansion ratio which is not desirable as it results in a higher blowing agent usages.

In WO-A 2001002473 blends of EVA with an vinyl acetate content of 21 wt.% and thermoplastic ethylene polymers with acidic groups are described for enhanced set properties. However, an influence on bonding and further elastic properties are not mentioned.

WO-A 8808860 describes sponge compounds where LDPE is modified with EPDM to achieve a good resilience. The addition of the rubber EPDM to the LDPE intends to overcome the otherwise very insufficient elastic properties of pure LDPE. However the absence of polar groups in the used polymers will also lead to a non-polar material which is very difficult to bond to other parts of an athletic sport shoe.

Bonding of sole parts of sports shoes is performed with polyurethane based thermo-activatable adhesives. These adhesives have to be heat activated prior to bonding to create a highly tacky glue line. Bonding strength is achieved after cooling with re-crystallization of the adhesive and by a crosslinker. Preferably those adhesive grades are chosen which do not discolor under the influence of daylight. This can be achieved by the exclusive use of aliphatic starting components for the polyurethane.

It is now state of the art to use water-based polyurethane adhesives rather than solvent-borne adhesives for sport shoe bonding. Water-based adhesives have considerably improved the working place conditions in the footwear assembly which is still dominated by manual operations due to high complexity and the large number of individual pieces of a modem sport shoe. The cross-linking of the polyurethane based adhesive crates the ultimate bond strength and is achieved by addition of isocyanate dispersions or water-dispersible isocyanates to the adhesive dispersion and takes place in the course of some days after bonding. It is state of the art to both use 2-component systems (isocyanate is added short before use) or 1-component systems where the combination of water-based polyurethane adhesive and isocyanate cross-linker is stable for a longer period of time

For proper bonding of EVA based sponge soles with polyurethane or other water-based adhesives the parts have to be pretreated with primers. The most important class of primers are solvent based UV-curable coatings. These coatings on the sponge surface provide the basis for a sucessful bonding with water-based PU adhesives. They have, however, the drawback that they still are solvent-based. Although easy to apply and fastly drying solvent vapors have to be removed from the working place and emissions have to be controlled. This problem is for example discussed by Stephen Abbott in the SATRA Bulletin of November 2003. In the assembly of shoes the gluing phase is carried out by hand so that there is a need to minimize the use of dangerous or toxic or flammable materials.

In WO-A 9903907 a primer is described based on a mixture of a non-halogenated polymer, a halogenated polymer and an isocyanate in solvent which is not a solution to the presented problem because it is still sovent based. WO-A 9805704 is yet another example specially for EVA based shoes which are still solvent based and which also need a UV cure.

Another type of pretreatment of EVA based sponges is the application of an electrically generated plasma on the surfaces to be bonded as shown in JP 2002234113. Such a process requires a complicated technical equipment to be adapted to the assembly process of the shoe manufacturing which is disadvantageous. It is still difficult to apply such a plasma for example on the complicated and variable three-dimensional shape of sport shoe sole parts because duration of treatment and distance to plasma source has to be carefully controlled for a consistent surface quality.

For the treatment of out-sole rubber parts halogenation primers have been developed which chlorinate diene rubber surfaces. These halogenation agents can be solvent-based (for example tri-chloro-isocyanuric acid (GB-A 2048896) but there are also trial products which are water-based. Due to the high double-bond content of diene rubbers which are typically used in out-sole compounds there are enough reaction site available for a surface activation (D.M. Brewis, R.H. Hahn, Swiss bonding 03, p. 68 et seqq.).

These water based primers are not suitable for EVA sponges due to the absence of double-bonds.

It has been suggested to oxidize EVA-based sponges to improve the bonding properties of these otherwise low energy surfaces. Such an oxidative treatment leads indeed to an improved wetting and anchorage of a solvent-based polychloroprene adhesive.

However, for a sufficient surface activation a highly concentrated sulfuric acid had to be used to create a roughened surface with microscopic cracks, modifying the EVA polymer with sulphonic groups (A. Martinez-Garcia et al., Journal of Adhesion, 79, 525 et seqq. (2003)). The treatment is followed by neutralization with ammonium hydroxide. Although such a treatment can be considered to be water-based the handling of concentrated sulfuric acid in a commercial shoe manufacture environment is very problematic in terms of safety.

In WO-A 9924498 another approach is presented where a microwave susceptible adhesive is place between assemblies like outer soles and EVA sponges to allow a microwave to heat the adhesive without deforming the shoe parts generating a sufficient bond strength, however, certain thermoplastics have to be used as adhesives and in many cases more than one adhesive layer has to be used. No reference is been made as to whether the EVA sponge has to be surface treated or not.

The state of the art presents a variety of compounds that show good resilience to be used as cushioning layer in the design of shoes but it is not disclosed how to bond these compounds with water-based surface treatment or without any primer.

The object of the present invention is therefore to provide a compound which shows good properties to be used as damping layer and furthermore can be bonded to a support material either with a purely water-based treatment of the surface or without using any primer at all.

The above object is achieved by means of a visco-elastic compound comprising
A) a polymeric component A,
B) 5 to 40 wt.% of a polymeric component B which is an ethylene vinyl acetate copolymer with a vinyl acetate content from 45 to 98 wt.%
   and
C) Additives as component C wherein
   the polymeric component A is an ethylene-homo-polymer or ethylen- copolymer selected from the group of ethylen-α-olefin copolymers, polyolefins with polar modifications and ethylene vinyl acetate copolymers with an vinyl acetate content up to 40 wt.%.

The inventive compound comprises advantageously 30 to 94wt.% of component A, 5 to 20 wt.% of component B and 1wt% to 25wt.% of component C.

In the inventive compound, preference is given when component A is an ethylene vinyl acetate copolymer with an vinyl acetate content in the range from 4 to 40 wt.% based on the total amount of polymer components.

In the inventive compound, preference is given to a compound wherein the vinyl acetate content of the ethylene vinyl acetate copolymer of component A is in the range from 5 to 35 wt.% and wherein the vinyl acetate content of component B is in the range from 60 to 95 wt.%.

The inventive compound comprises advantageously a rubber material as a polymeric component D.

In the case of the inventive compound, preference is given to a rubber material which is selected from the group of ethylene propylene rubbers, diene rubbers, diene based block copolymers, butyl rubbers, their halogenated derivatives and silicon rubbers.

The mixing of component A, component B and component C in a mixing device is the preferred process for preparing the compound of the invention.

Another invention is the use of the inventive compound for producing soft expanded articles.

Another invention is a process for the production of a soft expanded article by vulcanizing and expanding the inventive compound.

Another invention is the use of the soft expanded article as damping layer or cushioning layer which is obtainable by vulcanizing and expanding the inventive compound.

Another invention is the soft expanded article which is obtainable by vulcanizing and expanding the inventive compound.

The polymeric component A is selected from the group of an ethylene-homo-polymer or ethylene-copolymer selected from the group of ethylene-α-olefin copolymers, polyolefins with polar modifications and ethylene vinyl acetate with an vinyl acetate in the range from 4 to 40 wt.%. Polyolefins with polar modifications are polyolefins with a polar group selected from the group of carboxylic acid vinyl esters, acrylic esters and acrylic acids.

The preferred polymeric component A has a melt flow index in the range from 0.2 to 100, more preferable between 0.5 to 10 (measured as g/10 minutes at 190 °C, with 2.160 kg weight) so that the rheological behavior, especially the flowability into moulds and the expansion behavior can be adjusted. Preferred 30 to 94 wt.%, more preferred 50 to 90 wt.% of component A based on the total amount of polymeric components in the inventive compound are used in the compound.

Suitable polyethylenes as polymeric component A are all polyethylenes known to the person skilled in the art, more preferred is low density polyethylene (LDPE) with a melting point below 110°C.

Suitable α-olefins for the ethylene-α-olefin are propene, butene, pentene, hexene and octene. The comonomer content of these ethylene copolymers influences the physical properties of the compound in the sense that flexibility, low temperature properties and elongation increase whereas hardness and stiffness decrease. Therefore the preferred comonomer content is in the range from 5 to 35 wt.% based on the total amount of ethylene-α-olefin. The comonomers of the ethylene-α-olefins are preferably selected of the group of propene, butene, hexene and octene most preferred comonomers are butene, hexene and octene.

The most preferred polymeric component A is an ethylene-vinyl acetate copolymer with a vinyl acetate in the range from 4 to 40 wt.% (EVA), preferred in the range from 9 to 33 wt.%.

The polymeric component B is an ethylene- vinyl acetate copolymer but with a higher vinyl acetate content than the EVA of polymeric component A. The vinyl acetate content of the ethylene vinyl acetate copolymer of component B is in the range from 45 to 98 wt.%, preferred from 50 to 95 wt.%. An ethylene-vinyl acetate copolymer with a vinyl acetate content in the range of component B is called EVM while the ethylene vinyl acetate copolymer of component A with a lower vinyl acetate content is called EVA. The inventive compound comprises 5 to 40 wt.%, preferred 5 to 30 wt.%, more preferred 10 to 20 wt.% of the component B based on the total amount of the polymeric components of the inventive compound.

The use of component B in the inventive compound improves the bondability of the inventive compound to any material in general, but more specifically to support materials, other soling parts and to leather. This is surprising as the total amount of polar comonomers such as vinyl acetate in the whole compound is still very low.

Comparable bondability values without the use of EVM will only be reached by introducing greater amounts of vinyl acetate by means of polymer component A, however, then properties of the sponges would deteriorate and handling would become extremely difficult due to stickiness.

Additives are included in the inventive compound as component C. Preferred are 1 to 20 parts, more preferred 5 to 15 parts of component C based on 100 parts of polymeric components in the inventive compound. Additives as further components in the inventive compound are such as free radical crosslinking agents, preferably peroxides, blowing agents and certain blowing agent activators and other means to control the foaming process, fillers and pigments, stabilizing additives like anti-oxidants and UV-absorbers and processing aids. Additives C can be cross-linking agents in an amount from 0.1 to 8 wt.% including co-agents, blowing agent in an amount from 0.5 to 15wt% including activators for the blowing agent. Optionally processing aids, colorants, pigment and fillers can be added to make up in total less than 25 wt%.

Suitable peroxides are all peroxides known to the person skilled in the art. Preferred peroxides are those which are stable enough to prevent premature crosslinking during the preparation of compounds and give the desired degree of crosslinking in the finished article. More preferred peroxides are dicumyl peroxide, 2,5-dimethyl-2,5di(t-butyl-peroxo)hexane, t-butyl-cumyl peroxide, 1,3-bis(t-butyl-peroxyl-i-propyl)benzene and 1,1-di-t-butylperoxy-3,3,5 trimethylcyclohexane. The amount of peroxides influence the degree of crosslinking. High crosslink densities give better set properties improving the fatigue resistance of the sponge. The choice of peroxide and optionally co-activators must be adapted to the blowing process so that small bubble sized closed cell sponges can be achieved. Suitable co-activators for the crosslinking are all co-activators known to the person skilled in the art. Preferred co-acitvators are selected from the group of multi-functional acrylates and (iso)-cyanurates containing ally-groups or diene polymers with a molecular weight in the range from 1000 g/mol to 10,000 g/mol

It is also possible to achieve a certain crosslinking by means of irradiation but this is only of practical value for thin sheets or articles due to the limited penetration of ionizing radiation (i.e. electron beams).

Preferred fillers are calcium carbonate, talcum, barium sulfate, calcium and aluminium silicates and precipitated silica which improves the abrasion resistance. Generally, the amount of fillers is limited to avoid too much increase of density and thus to avoid too high weight of the resulting shoes. The preferred amount of fillers is therefore in the range from 1 to 15 parts based on the amount of polymeric components in the inventive compound. Pigments can be added to achieve a bright white color or to allow to introduce any color for design purposes. Typical pigments are titanium dioxide (Rutil or Anatas-type), zinc sulfide, zinc oxide, iron oxide, carbon black and other organic and inorganic pigments. Preferred organic pigments are diazo compounds, diazo condensation products, antraquione dyes, quinophthalone dyes. Without limiting the use of colorants to be incorportated into the compound according to the invention some colorants are mentioned her. Solvent Red 111, Phthalocyanine Blue, Disperse Violet 1, Quinacridone, Disazo pyrazolone, Anthrapyrimindine Yellow and Isoviolanthroneviolet.

For organic pigments to be used it is recommended to check the effect of the radical initiated curing on the color.

The EVM according to this invention improves the color fastness of the compound and facilitates the introduction dying agents into the compound. Another effect of the introduction of component B into the compound according to the invention is the use in dip-dye processes.

This technology allows to color sponge parts by briefly dipping them in a warm solution or dispersion of a dye. It was found that the dye penetrates into the sponge to form a layer of colored polymer. The sponge kept is color even after scratching. It was found that the use of component B greatly enhances the color intensity whereas standard EVA (EVA with an vinyl acetate content up to 40 wt.%) based materials stayed quite pale. The color stays in the sponge parts even after contact at 50°C with a non-colored sponge.

This was surprinsing because according to the existing technology only tinting processes for polycarbonates or polyester-type materials had been described, for example EP-A 1213322, US-A 2003084521, JP 61218662, WO-A 8401971, US 4245991.

This technology broadens design option in the shoe industry because it allows to manufacture runs with very individual colors without any changes in the basic sponge recipe by just using different dye bathes. The intensity of the coloration also depends on the time of dipping so that color variation for example on a sole part can be achieved by removing the part slowly out of the bath. It is also possible to combine color by stepwise dip-dyeing. Depending on the selection of dyes it is possible to prepare colorant dispersion or solutions which are only based on water as a carrier without the use of solvents.

To modify existing EVA sponge material to allow easier coloring or tinting in order to broaden design options for sponge-like articles is only possible when EVM is included in the sponge. Such a desired process is to apply colors to the already manufactured sponge parts without changing the recipe of the sponge compound or the process for the sponge manufacture. Such a coloring process can be dip-dyeing of the sponges. Coloring of the articles is carried out by preparing dispersion of the dye or pigment in aqueous or non aqueous media containing an amount of dye pigment calculated to yield a desired intensity of color.

The preferred process is based on dispersions or solution of dyestuff in water.

However existing sponge material based on EVA have a poor dyeability . Now it was found that compounds and expanded articles according to the invention can be dyed by the dip-dye process.

The classes of dyes which can be used are disperse dyes like azo and antraquinone colorants and acidic dyes. Typical of such colorants, which can be used in the practice of this invention, are Solvent Orange 20; Acid Blue 83; Acid Blue 59; Direct Blue 86; Direct Red 81 and Acid Yellow 36 (C.I. 13065), cationic dyestuffs can also be used for example Rhodamine 6G and Rhodamine B, tyical disperse dyes are Disperse Yellow 3, Disperse Orange 30, Disperse Red 55:1 or Disperse Blue 56 solvent nonionic dyes such as Solvent Yellow 93.

Suitable dyes are those which can be dispersed in water to form a fine particulate dispersion. It is possible to use surfactants and other auxilary materials to improve dispersibility of the dye material and to enhance the diffusion of the dye into the substrate. These material are known as functional agents.

The coloring of sponge parts is possible in a warm dye bath to speed up the process. Preferred temperatures are between 40°C to 120 °C, more preferred are temperatures from 50°C to 85°C. The temperature of the dispersion is determined by the desired rate of diffusion, or the rate of production: the higher the temperature the shorter the time required to reach a predetermined level of tinting. The article may be kept in the dispersion for a predetermined time necessary to achieve a desired intensity of tint. An upper limit of the temperatures for sponges according to this invention is the temperature where the sponge still kept is dimensions without distortion of the shape.

Preferred blowing agents are selected of the group of chemical blowing agents such as azodicarbonamides, dinitroso-pentamethylene-tetramine, p-toluene sulfonyl hydrazide or p,p'-oxybis(benzenesulfonyl hydrazide and mixtures of theses compounds. More preferred is the use of azodicarbonamides. These products are supplied in various particle sizes to control the bubble formation and sponge density. The preferred amount of blowing agents are in the range from 1 to 5 parts based on the total amount of polymeric components in the inventive compound.

It is also possible to use physical blowing agents which are volatile components which generate bubbles during processing. These blowing agents are less preferred due to the practical problems with their use, especially the difficulty to introduce these ingredients homogeneously into a compound and to prepare micro-cellular closed-cell article as requested in many sponge applications.

Chemical blowing agents can be used in combination with activators or so called kickers which allow to lower the decomposition temperature for a better adaption to the cross-linking process or to the thermal characteristics of the molding process.

Preferred activators are zinc oxide, zinc stearate or magnesium oxide or zinc oxide together with stearic acid or any combinations. Typical the amount of these activators is in the range from 1 to 8 parts based on the amount of polymeric components in the inventive compound.

The amount of blowing agent is related to the desired density of a sponge and has to be determined for a certain compound recipe.

The inventive compound can additionally contain rubber materials as component D. Optionally as additional polymeric component D elastomeric materials can be incorporated such as natural rubber, poly-isoprene, butyl rubber and it's halogenated versions, EPM and EPDM:

The preferred amount of the component D is in the range from 0 to 40 wt.% based on the total amount of the compound of the invention. Suitable components D are selected from the group of ethylene-propylene rubbers (EPM), ethylene-propylene diene rubber (EPDM), diene rubbers, diene based block copolymers, butyl rubber, their halogenated derivatives and silicon rubbers. More preferred are butyl rubbers, especially halo-butyl rubber and EPDM.

Additionally the inventive compound can contain waxes, pigments, flow improvers and demolding agents. Suitable waxes are all waxes known to the person skilled in the art. Typical waxes are hydrocarbons, ester waxes and low molecular weight polyethylenes. The addition of low molecular weight materials is common praxis to ensure easy demolding but should be kept at a minimal level to prevent adverse effect on bonding.

The present invention also provides a process for the production of the visco-elastic compound, characterized in that the components A, B and C are mixed in a mixing device optionally together with component D and the other ingredients. Principally, any suitable mixing process can be used, however, for a sufficiently homogeneous mixing the polymeric components have to be molten in the course of mixing. The necessary heat can be introduced either by external heating or by friction heating. Too high temperatures have to be avoided to prevent premature foaming or crosslinking of the compound. The process for preparing the inventive compound comprises a first step where the ingredients are mixed under application of shear and heat to achieve a homogeneous mixture, however, without premature crosslinking or foaming. Mixing can be conducted batch-wise or in a continuous mode depending on practical and economical considerations. This mixing can be performed in internal mixer/kneaders of banbury type, on rubber mills or in extruders with sufficient mixing elements, especially in twin-screw-extruders.

By the use of component B in the inventive compounds an ethylene-vinyl acetate copolymer with higher polarity is introduced. Other polar compounding ingredients like peroxides or fillers have higher preference to reside in the more polar phase which allows to selectively achieve for example higher cross-link densities or filler concentrations. This can be more pronounced if mixing sequenced are used where components C are first combined with component B prior to adding component A. Higher cross-link densities can then be achieved without interference with the blowing process. Higher cross-link densities improve the set properties leading to a better shape retention of the sole which in turn allows the sport shoe to be used for a longer time. This can be achieved by the selective crosslinking of the inventive compound without any detrimental effect on the expansion process.

Once a sufficiently homogeneous mixture is obtained a shaping of the compound is necessary. If pellets are desired the compound has to be plasticized in an extruder equipped with a pelletizing device such a strand cutter or rotating dy-cutter together with efficient cooling (i.e. under water).

It is also possible to use rolls or calendars to obtain strips or sheets for compressing molding.

The foaming can be carried out in a compression molding process or with the injection molding process. For compression molding sheets of suitable size are placed into molds which allow heating under pressure. The compound sheet are cured and gas bubbles are nucleated. With opening of the mold the foam fastly expands whereby the cross-linking prevents the bubbles to be ruptured. These foamed sheets can be cut and grinded for a further shaping. These roughly shaped foams have no skin. The skin, however, is important for design purposes such as engraving logos or for surface design. Also, the skin brings about a certain abrasion resistance. Therefore, these roughly shaped foams get their final shape in an additional molding step which also generates a skin due to surface melting, also some final crosslinking is achieved. This compression molding process is time consuming, generates waste and needs a lot of manual operations. It allows, however, a very exact shaping of even very complex sole parts. The process of injection molding is less labor intensive and generates much less waste. For such a process the fully formulated compound need to be converted into granules to be fed into extruders which melts the compound and inject the melt into one or more molds in multi station machines. After the prescribed molding time the mold is opened very fastly with ejection of the article which instantaneously expands to the final shape. The technical challenge of this process is to produce sole parts with consistent dimensions and densities without further corrections. Both manufacturing processes can be carried out with the compound according to this invention.

Certain properties however, namely the excellent micro-cellular structure of the sponge according to the invention, are beneficial for the direct molding process.

The present invention also provides a process for the production of soft articles by vulcanizing the compound of the present invention. The vulcanization will be carried out between 150 and 180 °C, more preferred between 160 to 175°C. Often expanded soles are thermally treated after release from the mould to allow evaporation of volatile components namely of decomposition products of peroxides, and to achieve a certain post-curing. A higher degree of cross-linking gives improved set properties but also higher hardness and stiffness.

The present invention also provides the use of the soft articles as damping layer.

The present invention also provides soft articles obtainable by vulcanizing the compound of the invention. Advantageous soft articles are selected from the group of shoe soles, mattresses, equipment handles and packing materials, more generally, numerous applications can be found in the area of fitness, sports and leisure footwear, flotation product, packing, orthopedic and rehabilitation products, for personal protection equipment and the like.

It was found that the modification of standard EVA based sponge formulations with EVM allows to achieve the desired enhanced bondability and to realized a higher degree of variability of sponge properties.

Modification of EVA-based sponges with EVM allows to design sponge materials with different mechanical properties which are still compatible with standard EVA sponges. This in turn facilitates the technique of co-injection molding as described by Wang in Annual Technical Conference - Society of Plastics Engineers (2001), 59th(Vol. 1), 746-751, Taiwan.

One advantage of the invention is that parts with different softness or damping properties can be combined in sport shoe soles by co-injection molding of EVA-based compounds that are modified in different ways. This eliminated the prefabrication of different parts and glueing these parts together.

Such a process is envisaged in EP 1238790 where preformed, partly vulcanized EVA sponge parts and hard EVA-based support elements are cured together, however, the beneficial use of component B (EVM) like in the inventive compound is not described.

Compounds according to this can be bonded. Bye use of state-of-the-art water-based PU adhesives without prior application of primer system thus avoiding a production where still solvent adhesive handling is involved. Water-based polychloroprene adhesives systems can also be used without primer - these adhesives can be used where the glue line is not exposed to sun-light or where color stability is not an issue. Component B of the invention features a thermo-sensitivity which is perfectly adopted to the special requirement to runner's feet.

### Examples:

### Materials:

- EVA 18%:: Ethylene-Vinyl acetate copolymer with a vinyl acetate content of 18 wt.% and a MFI of 2, sold by ExxonMobil as Escorene Ultra 00218.
- EVA 9.4%:: Ethylene-Vinyl acetate copolymer with a vinyl acetate content of 9.4 wt.% and a MFI of 2, sold by ExxonMobil as Escorene Ultra FL 00209.
- Levapren® VP KA 8939:: Ethylene-Vinyl acetate copolymer with a vinyl acetate content of 91 wt.%, a MFI of 5 and a Mooney value of ML 1+4,100°C of 38 MU
- Levapren® 450:: Ethylene-Vinyl acetate copolymer with a vinyl acetate content of 45 wt.% and a Mooney value of ML 1 +4, 100°C of 21 MU.
- Levapren® 600 HV:: Ethylene-Vinyl acetate copolymer with a vinyl acetate content of 60 wt.% and a Mooney value of ML 1+4, 100°C of 27 MU
- Levapren® 500 HV:: Ethylen-Vinyl acetate copolymer with a vinyl acetate content of 50 wt.% and a Mooney value of ML 1+4, 100°C of 27 Mu.
- Tronox® R-U-5:: a 99 wt.% titanium dioxide with a hydrophilic surface treatment to allow better dispersability in polymers, sold by Kerr McGee Corporation
- EDENOR® C 18 98-100:: C₁₀- stearic acid with a purity of 98%, sold by Cognis Deutschland GmbH
- Mikrosöhlkreide:: CaCO₃ sold by Vereinigte Kreidewerke Dammann
- Perkadox® BC-40:: Dicumyl peroxide sold by Akzo Nobel.
- Harochem® ZG-D:: Zinc stearate, for rubber applications
- Porofor ADC/M-C1:: Azodicarbonic acid diamide, 99 %, average particle size 3.9 µm

Amounts in the table are given in phr. The polymeric components make up 100 parts.

### Series 1: Comparison Examples and Modification of EVA-bases sponge recipes.

The non-polymer mixing ingredient were kept constant except for the blowing agent which had to be adjusted to keep the sponge density constant. After mixing of the components in a rubber mill sheets were prepared. The sheets were cut into a suitable shape and placed into the preheated so that it was filled close to 100% after closure. Flat rectangular sponges were obtained after curing and very fast opening of the mold. This procedure resembles the injection molding process.

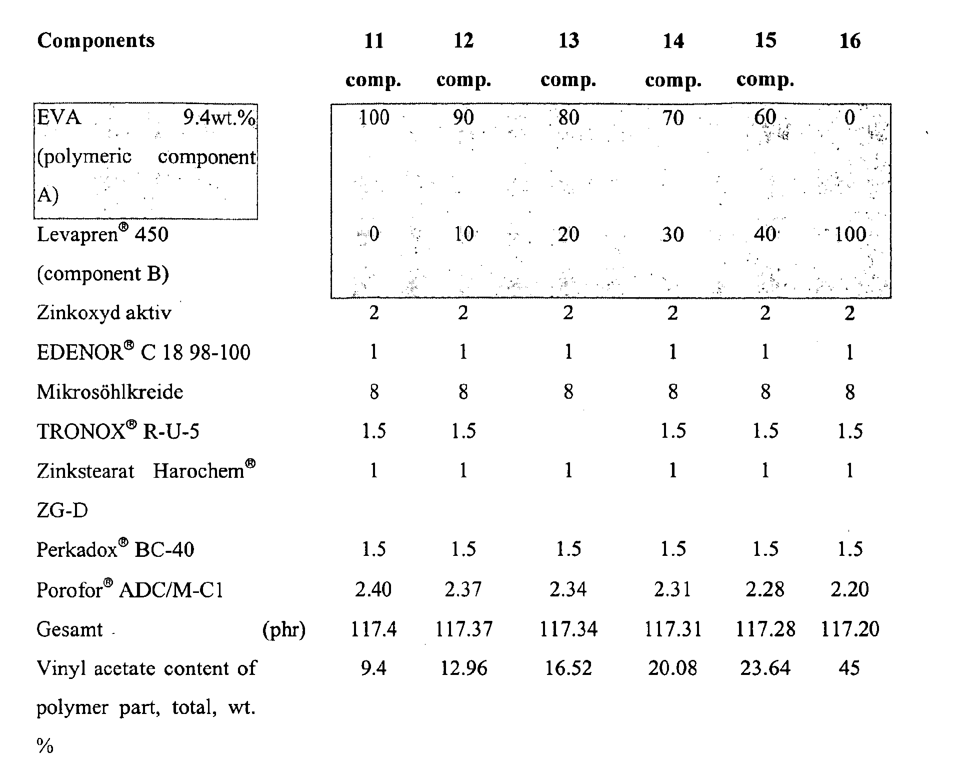

| Mixing in Rubber Mill, at 20 rpm, friction 1.22 | | | | | | | |
|---|---|---|---|---|---|---|---|
| Temperature of rubber mill | (°C) | 100 | 100 | 100 | 100 | 100 | 20 |
| Mixing time | (min) | 45 | 45 | 45 | 45 | 45 | 35 |
| MDR measurements with Rheometer 2000 P (with pressure measurement, 170°C / time 15 min | | | | | | | |
| MINIMUM torque | (S'dNm) | 0.26 | 0.27 | 0.28 | 0.28 | 0.28 | 0.17 |
| MAXIMUM torque | (S'dNm) | 1.90 | 1.76 | 1.62 | 1.45 | 1.30 | 0.57 |
| MAX - MIN torque | (S'dNm) | 1.64 | 1.49 | 1.34 | 1.17 | 1.02 | 0.40 |
| t10 | (min) | 1.39 | 1.46 | 1.49 | 1.48 | 1.47 | 2.53 |
| t80 | (min) | 6.71 | 7.00 | 6.81 | 6.75 | 6.67 | 6.95 |
| t90 | (min) | 8.95 | 9.14 | 9.20 | 8.99 | 8.88 | 8.16 |
| TP 10 | (min) | 0.23 | 0.27 | 0.24 | 0.30 | 0.31 | 0.42 |
| TP 50 | (min) | 2.01 | 2.05 | 2.07 | 2.15 | 2.08 | 1.95 |
| TP 90 | (min) | 2.48 | 2.47 | 2.52 | 2.62 | 2.67 | 2.92 |

| Pressure results 170°C/current time 15 min M250 | | | | | | | |
|---|---|---|---|---|---|---|---|
| P min | (kPa) | 1135 | 980 | 1005 | 1035 | 865 | 895 |
| P max | (kPa) | 3600 | 3325 | 3465 | 3360 | 3190 | 3450 |
| P max - P min | (kPa) | 2465 | 2345 | 2460 | 2325 | 2325 | 2555 |
| Vulkanization 170°C/time in minutes | | 10 | 10 | 15 | 15 | 15 | 15 |
| Density | (g/cm³) | 0.153 | 0.158 | 0.160 | 0.154 | 0.158 | 0.171 |
| Tensile strengh | (S2 (MPa) samples) | 1.8 | 2.0 | 1.9 | 1.8 | 1.7 | 1.3 |
| Elongation | (%) | 235 | 255 | 235 | 265 | 270 | 480 |
| M25 | (MPa) | 0.6 | 0.6 | 0.6 | 0.5 | 0.5 | 0.2 |
| M50 | (MPa) | 0.9 | 0.8 | 0.8 | 0.7 | 0.6 | 0.3 |
| M75 | (MPa) | 1.0 | 1.0 | 1.0 | 0.9 | 0.8 | 0.3 |
| M100 | (MPa) | 1.2 | 1.1 | 1.1 | 1.0 | 0.9 | 0.4 |
| M150 | (MPa) | 1.4 | 1.4 | 1.4 | 1.3 | 1.2 | 0.5 |
| M200 | (MPa) | 1.7 | 1.7 | 1.7 | 1.5 | 1.4 | 0.6 |
| M250 | (MPa) | - | 1.9 | - | 1.8 | 1.6 | 0.8 |
| Hardness | (Shore A) | 30 | 28 | 26 | 24 | 20 | 9.4 |
| Hardness | (Asker C) | 59 | 59 | 57 | 50 | 44 | 15 |
| Elasticity - rebound | (%) | 32 | 32 | 34 | 35 | 34 | |
| Compression set 6h/50°C/acc. DIN 53517B, deformation 25% | (%) | 69 | 66 | 65 | 67 | 74 | 56 |

Sponge sample 13 to 16 have a_rubber-like feel, sample 16 is very soft_and rubbery, sample 11 fells dry and plastic-like

Eplexor measurements to determine dynamic damping properties at various temperatures in °C and the relative dissipated energy
Sample geometry: 10 mm diameter* 10 mm length
frequency 10 Hz, Deformation 10 %, temperature from - 101 °C to 99 °C with 1 K/min, test controll unit Eplexor from Gabo Qualimeter Testanlagen GmbH

| | | | | | |
|---|---|---|---|---|---|
| 10°c | (mJ) | 0.323 | 0.296 | 0.275 | 0.184 |
| 20°C | (mJ) | 0.234 | 0.208 | 0.205 | 0.117 |
| **30°C** | **(mJ)** | **0.170** | **0.159** | **0.144** | **0.088** |
| **40°C** | **(mJ)** | **0.119** | **0.111** | **0.104** | **0.069** |
| | | **27.9%** | **27.6%** | **28.3%** | **27.4%** |
| 50°C | (mJ) | 0.081 | 0.078 | 0.072 | 0.052 |
| 20°C, force at midpoint | N | 14 | 12.6 | 11.7 | 8.6 |
| 40°C, force at midpoint | N | 10.5 | 8.9 | 8.5 | 6.4 |

Series 2: Modification of EVA-bases sponge recipes with an EVM of high VA content

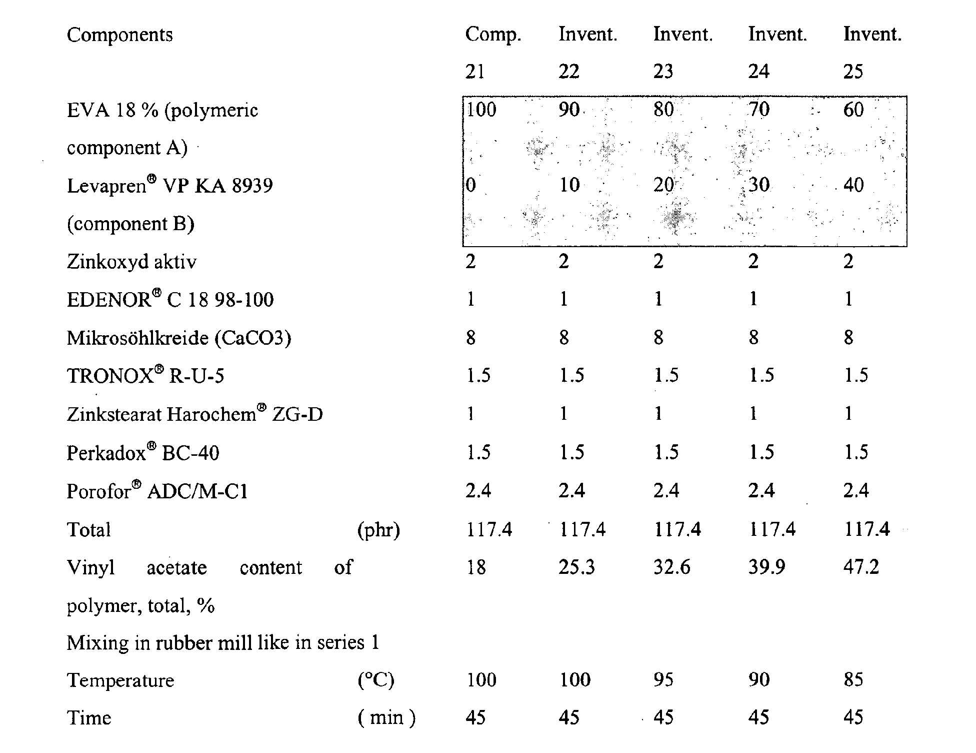

| MDR - Rheometer 2000 P (with pressure measurement), at 170°C / time: 15 min | | | | | | |
|---|---|---|---|---|---|---|
| MINIMUM torque | (S'dNm) | 0.30 | 0.28 | 0.26 | 0.26 | 0.25 |
| MAXIMUM torque | (S'dNm) | 2.39 | 1.97 | 1.68 | 1.42 | 1.20 |
| MAX - MIN torque | (S'dNm) | 2.09 | 1.69 | 1.42 | 1.16 | 0.95 |
| t10 | (min) | 1.87 | 1.81 | 1.87 | 1.76 | 2.32 |
| t80 | (min) | 6.68 | 6.72 | 6.99 | 7.21 | 7.38 |
| t90 | (min) | 8.89 | 8.62 | 8.80 | 9.12 | 9.45 |
| TP 10 | (min) | 1.59 | 1.67 | 0.36 | 1.50 | 1.39 |
| TP 50 | (min) | 1.97 | 2.22 | 2.30 | 2.34 | 2.28 |
| TP 90 | (min) | 2.39 | 3.00 | 3.03 | 3.14 | 3.15 |

| Pressure data at 170°C / time: 15 min | | | | | | |
|---|---|---|---|---|---|---|
| P min | (kPa) | 900 | 785 | 870 | 760 | 615 |
| P max | (kPa) | 3235 | 3535 | 3695 | 3520 | 3385 |
| P max - P min | (kPa) | 2335 | 2750 | 2825 | 2760 | 2770 |

| Vulkanisation 170°C/10min | | | | | |
|---|---|---|---|---|---|
| Density | (g/cm³) | 0.179 | 0.164 | 0.165 | No expansion |
| Tensile | (Mpa) | 2.3 | 2.2 | 1.9 | |
| Elongation | (%) | 245 | 300 | 300 | |
| M25 | (Mpa) | 0.6 | 0.5 | 0.5 | |
| M50 | (Mpa) | 0.8 | 0.7 | 0.6 | |
| M75 | (Mpa) | 1.0 | 0.8 | 0.8 | |
| M100 | (Mpa) | 1.2 | 0.9 | 0.9 | |
| M150 | (Mpa) | 1.5 | 1.2 | 1.1 | |
| M200 | (Mpa) | 1.9 | 1.6 | 1.4 | |
| M250 | (Mpa) | 2 | 1.6 | 1.6 | |
| Hardness | (Shore A) | 28 | 23 | 18 | |
| Elasticity | (%) | 44 | 32 | 22 | |
| Compression set 6h/50°C | (%) | 60 | 68 | 85 | |
| Hardness | (Asker C) | 53 | 50 | 46 | |

**Sponge samples 22 to 25 have rubber like feel whereas sample 21 is more dry with a thermoplastic-like feel**

**Eplexor Data at various temperatures in °C: dissipated energy in absolute values and relative values**

| | | | | |
|---|---|---|---|---|
| 10 | (mJ) | 0.151 | 0.175 | 0.210 |
| | | 29.4% | 28.6% | 26.6% |
| 20 | (mJ) | 0.101 | 0.139 | 0.190 |
| | | 26.7% | 31.4% | 35.9% |
| **30** | **(mJ)** | **0.067** | **0.102** | **0.125** |
| | | **19.1%** | **37.3%** | **49.1%** |
| **40** | **(mJ)** | **0.037** | **0.041** | **0.041** |
| | | **19.1%** | **26.4%** | **33.8%** |
| 50 | (mJ) | 0.0206 | 0.0173 | 0.0156 |
| | | 14.8% | 17.3% | 20.5% |
| 20°C, force at midpoint | N | 11.3 | 8.2 | 7.2 |
| 40°C, force at midpoint | N | 7.8 | 5.6 | 4.7 |

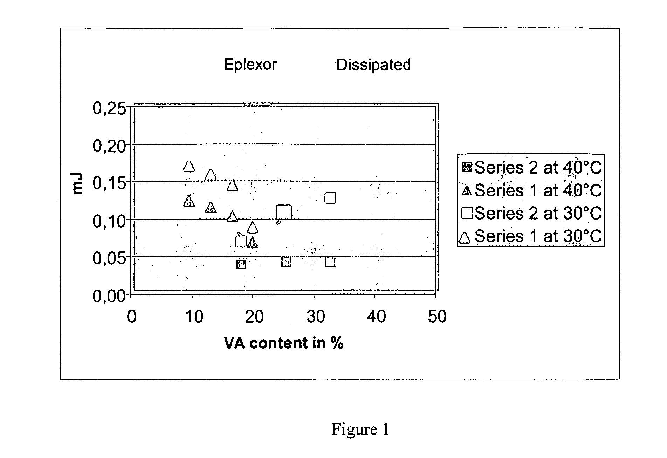

The mechanical analysis of the sponges was based on tensile data, determination of hardness (Shore A and Asker C) and dynamical tests (Explexor measurements, see figure 1, the vinyl acetate content is averaged for components A and B. The data of series 1 (EVA-9.4% and additions of Levapren® 450 that there is a continuous decrease of hardness and sponge stiffness with increasing vinyl acetate. One can also see that the energy dissipation is lower with higher amounts of Levapren® 450 which is advantageous form the athletic point of view. The total vinyl acetate content of the polymeric components in the sponge compound can be taken as a good predictor for hardness or stiffness.

Standard hardness measurements (Shore or Asker) are taken at RT. The practical use of a sport shoe is at elevated temperatures close to the body temperature. This is due to the heat transfer from the foot to the shoe sole and also due to the conversion of mechanical energy into heat within the sponges during running. Once the shoes are warmed up they are less stiff and softer and also more elastic. A sponge manufacturer can thus achieve different sponge hardness, either to be used in different types of shoes or for different parts in the shoe, with essentially the same recipe components by just changing the ratios of the polymeric components. Stiffer parts are used where more support of the foot is needed which is at the arc area and also at the outer edges. Good cushioning is important especially at the heels to prevent damage to the runners joints.

Another important feature is the energy dissipation under mechanical stress which can be taken from Eplexor measurements. The dissipated energy is reduced if a with higher vinyl acetate content is introduced by addition of polymeric component B. Also, the elevated temperatures which are typical after some time of running give lower dissipated energies as shown in figure 1.

In series 2 with the use of the Levapren® VP KA 8939 in the compound the dissipated energy surprisingly increases if determined at RT as shown in Figure 1. This means that Levapren® VP KA 8939 introduces damping properties if the temperatures in the shoe are still low. Once the temperature in the shoes have reached an equilibrium which probably is around body temperature the damping effect disappears and the dissipated energy is similar like in the sponge without addition of this products. The result of this behavior is that at the beginning of a run there is faster warming up of the sponge due to higher mechanical energy dissipation. Once the body temperature is reached the energy loss is low and stays constant. The Eplexor measurements were taken at 10Hz, this being an average between the slightly faster process of landing on heel (with around 50 ms) and the slower process of jumping again using the for foot area which takes around 200 ms as described in WO-A 2001064787.

It is also surprising that the addition of Levapren® VP KA 8939 to the EVA-18% based sponge leads to smaller softening (only 3 point in Asker C), the forces in the Eplexor don't decrease as one might expect from the overall vinyl acetate content. This allows to modify an EVA-based sponge with and EVM without sacrificing too much of sponge hardness.

If a polymeric component B is introduced in the inventive compound the grip improves into the direction of a more rubber-like feel compared to haptic properties of thermoplastics which are more dry.

By comparison of sample 21 and sample 22 by light microscopy it was found that the average bubble was smaller in the compound according to the invention (50 and 30 µ). It was also noticed that the skin of the sponge 22 was thicker compared to sponge 21. Therefore it can be expected that sponges according to the invention will have a higher abrasion resistance and are more suitable for an application as a unitsole where at least parts of the sponge have contact to the ground.

This is especially surprising since in most cases the inventive compounds had a lower density with the same amount of blowing agent.

The following data will show that the inventive compounds give an unexpected improvement of bondability with standard PU-based adhesives and with polychloroprene based adhesives, especially with water-based system.

### Bonding tests 1:

### Water-based Polyurethane dispersion

### Materials:

- DISPERCOLL® U54:: aqueous polyester polyurethane dispersion with a solids content of about 50 wt.%, viscosity of 40 to 400 mPas, minimum activation temperature of 45 to 55 °C, sold by Bayer MaterialScience AG.
- Borchigel® L75N:: liquid, non-ionic polyurethane-based thickener with a solids content of 50 wt.%, sold bei Borchers
- Desmodur® DN:: solvent-free aliphatic emulsifiable isocyanate, NCO-content of 21.8 %, viscosity of 1250 mPas, sold by Bayer MaterialScience AG

The adhesive was formulated using Dispercoll® U54 with 1wt.% thickener Borchigel® L75N for thickening and with 3 wt.% Desmodur® DN as isocyanate-based water-dispersable crosslinker.

Sponge samples were cleaned with Ethyl-acetate, dried 30 minutes at RT. The adhesive dispersion was applied with a brush on the sponge and on a standard leather sample.

The glue lines were dried for 5 minutes at 80°C in a forced air oven to evaporate the water and to provide a sufficient thermo-activation.

The substrates were contacted for 30 s with 4 bars. The immediate peel (in N/mm) values were measured after 2 min.

Sponge sample from series 1 and 2 were used:

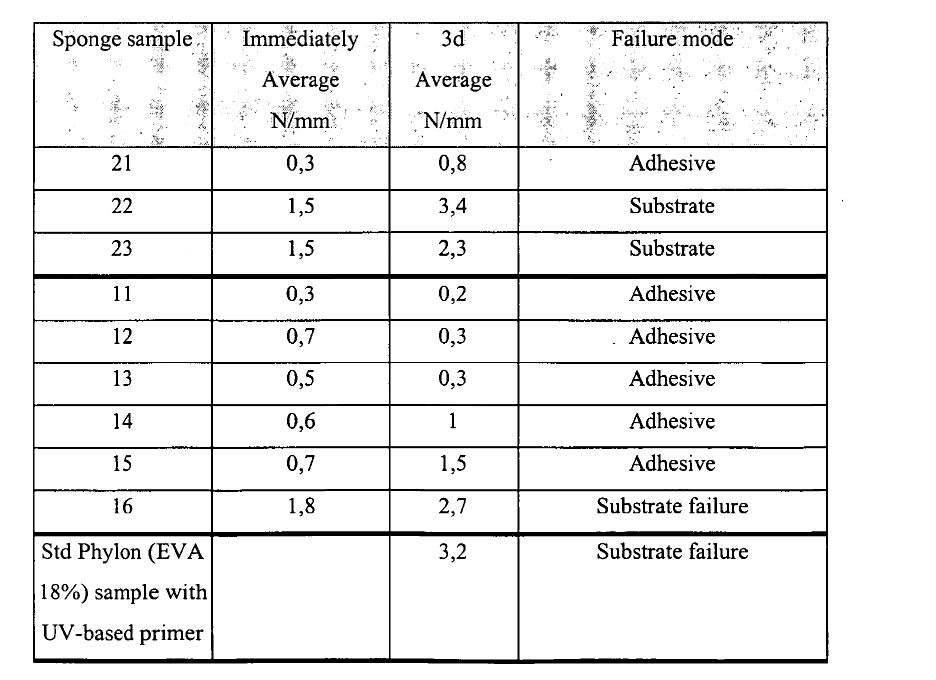

Series 3: EVA-based sponges with addition various EVM (component B) Bonding tests

| Components | Invent | Invent | Invent | Invent |
|---|---|---|---|---|
| | 31 | 32 | 33 | 34 |
| EVA 18 % (polymeric component A) | 100 | 90 | 70 | 60 |
| Levapren® ₍component B) | 10 L500 | 10 L600 | 10 L800 | 10 KA8939 |
| Mixing, curing and expansion behavior was very similar to trial series 1 | | | | |
| Harness Asker C | 46 | 46 | 44 | 46 |
| Density (g/cm³) | 0.167 | 0.161 | 0.159 | 0.161 |
| Elasticity-rebound (%) | 41 | 41 | 40 | 32 |
| | | | | |
| Bonding test with water-based PU-Dispersion like in the bonding tests 1 | | | | |
| Immediatly average (N/mm) | 0.95 | 0.79 | 1.05 | 0.91 |
| 3 days average (N/mm) | 3.34 some adhesive failure | 3.87 | 4.23 | 3.2 |
| Bonding test like above but without solvent wiping of the sponge, cleaning with a water-based cleaner | | | | |
| 3 days average (N/mm) | Not determin ed. | Not determin ed | 1.95 | 2.68 |

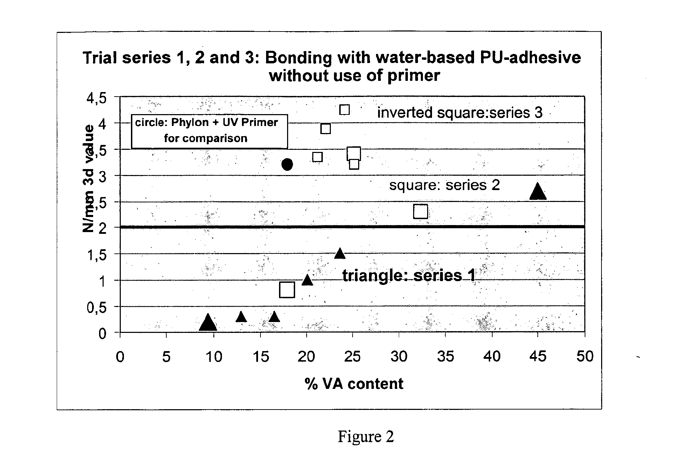

In Figure 2 peel values and vinyl acetate contents of the sponge samples are shown. There is obviously a direct correlation between vinyl acetate content peel data. Addition of polymeric component B with a vinyl acetate of 45 wt.% improves the bondability of the sponge. But only if this materials is added with a ratio of more than 40 wt.% the desired substrate failure mode is achieved. Such a material is quite soft and not always suitable for general mid-sole applications. If an EVM with a higher vinyl acetate is selected as polymeric component B a primer-less bonding can be achieved already with amounts 10 wt.%. This is exemplified with sponge 22 where 10 wt.% of the very high vinyl acetate polymer is enough for bonding with a PU based system.

Test series 3 shows the effect of the variation of the vinyl acetate content of polymeric component B at a constant concentration of 10 wt.% in polymer of the compound recipe. Component B with 50 wt.% vinyl acetate content already leads to a favorable bonding behavior. To achieve complete substrate failure a component B of vinyl acetate content of 60 wt.% should be used.

Therefore the vinyl acetate content of component B should be at least 45 wt.%, more preferably 50 wt.% to allow good bonding with an amount of 10 wt.%, even more preferred is vinyl acetate of 60 wt.% in component B.

The use of polyurethane adhesives is not restricted except that those grades should be used which have been proven to be suitable for bonding of standard primer treated sponges, also known as phylon material. The use of an isocyanate system to achieve crosslinking with the hydroxyl groups of the polyurethane is state of the art to ensure high enough bonding strength. These iso-cyanates can be dispersible due to introduction of hydrophilic groups and are combined with the PU-dispersion short before use. There are also isocyanate dispersions available which can be mixed with the PU dispersion to form a sufficiently stable one-component system.

The application of the PU-dispersion can be done with any of the known means such as brushing, spaying or dipping in order to achieve a sufficient adhesive coverage and thickness. The rheological and surface properties can be controlled with thickeners and wetting agents.

The method of thermo-activation is a heating process after film formation by drying of the adhesive dispersion on the substrate and creates a highly tacky glue line to allow bonding of the substrate and handling of the work peace shortly afterwards.

It is also possible to achieve bonding with polyurethane adhesives which are applied as 100% system, such as adhesives films, hotmelts and 2-component PU adhesives. The specific adhesive system can selected according practical requirements and bonding performance to be achieved.

### Bonding tests 2

### Water-based polychloroprene-based adhesive dispersion:

### Materials used:

- Dispercoll® C 84:: an aqueous dispersion of poly-chlorobutadiene with a solids content of 55 %, a viscosity of ac. 100 mPa s and a pH value of 13. Dispercoll® C84 is a fast crystallizing grade which is sold by Bayer MaterialScience AG.
- Dispercoll® S 3030:: a aqueous dispersion of silica in water with a particle size of ca. 9 nm and a specific surface of ca. 300 m²/g which is sold by Bayer MaterialScience AG.

Dispercoll® C 84, modified with 30wt.% of Dispercoll S 3030, 15 nm silica dispersion.

The sponge samples were cleaned with ethyl-acetate and dried. The adhesive dispersion was applied on the sponge surface and the leather, for 2 minutes dried in the forced air oven and contacted for 10 s with 4 bar. Sponge samples from series 1 and were used.

| Sponge sample | 1 d values | Failure mode. |
|---|---|---|
| 21 | 0.5 | Adhesive |
| 22 | **1.6** | **Substrate** |
| 23 | **1.6** | **Substrate** |
| 11 | 0.1 | Adhesive |
| 12 | 0.3 | Adhesive |
| 13 | 0.6 | Adhesive |
| 14 | 1.4 | Adhesive |
| 15 | **1.1** | **Immediate values, substrate failure** |
| 16 | **1.1** | **Immediate values, substrate failure** |

With the polychloroprene-based adhesive similar observations were made: the use of the very high vinyl acetate EVM KA8939 gives sufficiently high peel values leading to substrate failure already after 1 day.

In choosing the adhesive system to be used, not only the adhesive properties but also ecological and work hygiene considerations play a role.

Water-based adhesive systems comprising mainly polyurethane dispersions and polychloroprene dispersions are therefore preferably employed.

Suitable polychloroprene dispersions are produced by the emulsion polymerization in an alkaline medium of chloroprene and an ethylenically unsaturated monomer which is copolymerizable with chloroprene, as disclosed for example in WO-A 02/24825 (from line 26 on page 3 to line 4 on page 7), DE-A 30 02 734 (from line 23 on page 8 to line 9 on page 12) or US-A 5,773,544 (from line 9 of column 2 to line 45 of column 4).

It has proven to be an advantage that a combination of the above dispersions with finely divided silicon dioxide dispersions allows instant hardening to take place, especially in the moist state. These aqueous silicon dioxide dispersions typically have particle diameters of the SiO₂ particles of 5 to 100 nm.

Component B with high or very high vinyl acetate content gives an unexpected improvement of bondability which allows the use of PU-based adhesives dispersions without application of a primer. Component B is thermo-sensitive so that it causes a high energy loss at lower temperature thus accelerating the warming up. Once the equilibrium is reached it contributes to a highly elastic behavior of the sponge.

The amount of component B should preferably not exceed 30 wt.% because then the sponge recipe needs to be further modified to allow for proper expansion behavior.

### Trials to color sponges with a dip-dye process:

Sample 21 (comparison), 22 (inventive) and 23 (inventive) were colored with the following procedures:
Trial 1: A colorant bath was prepared as follows:
   200 ml de-mineralized water were mixed with a disperse dye to get a concentration of 0,5 g/l. The disperse is Red 60 dye: Resolin® Rot FB, from Bayer Chemicals, Leverkusen
   This bath was heated to a temperature of 85°C.
   Sponge samples 21, 22 and 23 (2 cm x 10 x 1 cm) were dipped for 15, 30, 60, 90 and 120 seconds.
   The samples were then rinsed with warm water, rinsed in cold water for 1 minute and then air dried.
Trial 2: a colorant bath was prepared like in trial 1 with the addition of
   0,1 g/L Carrier Levegal® PEW, a mixture of aromatic carbonic acid-ester from Bayer Chemicals
   After heating to 85°C sponge samples 21 and 22 were treated like above.
Trial 3: a colorant bath was prepared like in trial 1 using a metal complex dye
   0,5 g/l an acid Blue 264 dye: Telon® fast Blue AFN from Bayer Chemicals, Leverkusen)
   After heating to 85°C sponge samples 21 and 22 were treated like above.

### Migration was tested as follows:

Colored sponge samples were cut to 2 cm X 2 cm plates and presses between plates of the same sponge sample before dying using a weight of 5 kg at a temperature of 50°C and 24 h.
In all cases there was no migration of the dye into the virgin samples was observed.

| | | | |
|---|---|---|---|
| Sample | 21 | 22 | 23 |
| Trial 1, trial 2 | Pale red, spotty appearance | Red | Deep red |
| With trial 2 (use of carrier) the color intensity was enhanced, samples 22 and 23 were more intense colored than sample 21. | | | |
| The variation of dipping time allowed to adjust the color intensity, sample 21 was less intensely colored in all cases. | | | |

| | | | |
|---|---|---|---|
| Thickness of colored layer | Ca. 200 µ | 300 µ | 300 µ |
| Trial 3 | Light blue, spotty appearance | Blue | Blue |

## Claims

1. A visco-elastic compound comprising
A) a polymeric component A,
A) 5 to 40 wt.% of a polymeric component B which is an ethylene vinyl acetate copolymer with a vinyl acetate content from 45 to 98 wt.%
and
C) Additives as component C wherein
the polymeric component A is an ethylene-homo-polymer or ethylene copolymer selected from the group of ethylene-α-olefin copolymers, polyolefins with polar modifications and ethylene vinyl acetate copolymers with an vinyl acetate content up to 40 wt.%.

2. The compound according to claim 1, comprising 30 to 94 wt.% of component A, 5 to 20 wt.% of component B and 1 to 25 wt.% of component C.

3. The compound according to any of claim 1 to 2, wherein component A is an ethylene vinyl acetate copolymer with an vinyl acetate content in the range from 4 to 40 wt.% based on the total amount of polymer components.

4. The compound according to any of claim 1 to 3, wherein the vinyl acetate content of the ethylene vinyl acetate copolymer of component A is in the range from 5 to 35 wt.% and wherein the vinyl acetate content of component B is in the range from 60 to 95 wt.%.

5. The compound according to any of claim 1 to 4, comprising a rubber material as a polymeric component D.

6. The compound according to any of claim 5, wherein the rubber material is selected from the group of ethylene propylene rubbers, diene rubbers, diene based block copolymers, butyl rubbers, their halogenated derivatives and silicon rubbers.

7. A process for the production of the compound according to claim 1, comprising the step of mixing the component A, component B and component C in a mixing device.

8. The use of the compound according to claim 1 for producing soft expanded articles.

9. A process for the production of a soft expanded article by vulcanizing and expanding the compound according to claim 1.

10. The use of the soft expanded article according to claim 8 as damping or cushioning layer

11. Soft articles obtainable by the process of claim 8.
